# DEMANDE DE BREVET EUROPEEN

(11) **EP 1 983 242 A1**
(43) Date de publication de la demande: **22.10.2008**
(21) Numéro de dépôt: 08300169.3
(22) Date de dépôt: 01.04.2008
(51) Int. Cl.: F16L 3/22

(54) **Dispositif de maintien des conduits d'évents de corps d'élèments de robinetterie du type vanne**

(30) Priorité: 18.04.2007 FR 0754539
(71) Demandeur: Flowserve Polyvalves SA, 42440 Unieux (FR)
(72) Inventeur: Makhloufi, Akli M., 42100 Saint Etienne (FR); Butigieg, Guy, 42100 Saint Etienne (FR)
(74) Mandataire: Dupuis, François

(57) **Abrégé**

Le dispositif de maintien des conduits d'évents de corps d'éléments de robinetterie du type vanne est remarquable en ce qu'il comprend au moins un module (10) réalisé monobloc en un matériau plastique et susceptible d'être disposé dans un plan horizontal autour du ou des conduits latéraux et de la colonne du corps de vanne, et en ce que le module (10) présente une configuration en forme de pince avec une base arrière (10-1) qui est aménagée avec au moins une cavité (10.2) pour entourer le conduit latéral considéré et se prolongeant à l'avant par deux branches (10.3) disposées en regard l'une de l'autre, et définissant entre elles une cavité (10-4) centrale semi-cylindrique pour entourer la colonne principale du corps de robinetterie, et en ce que les deux branches sont susceptibles d'un écartement élastique l'une par rapport à l'autre, le module ayant une configuration globale en forme de pince, et en ce que chaque module présente des ouvertures (10.5) (10.6) le long de leur bordure périphérique (10.6) du côté de la base arrière et de part et d'autre de la partie branche (10.3) qui sont susceptibles de permettre le positionnement de liens (11) élastiques de fixation.

## Description

L'invention se rattache au secteur technique des éléments de robinetterie du type valves, vannes, robinets et des moyens et accessoires utilisés pour leur installation in situ.

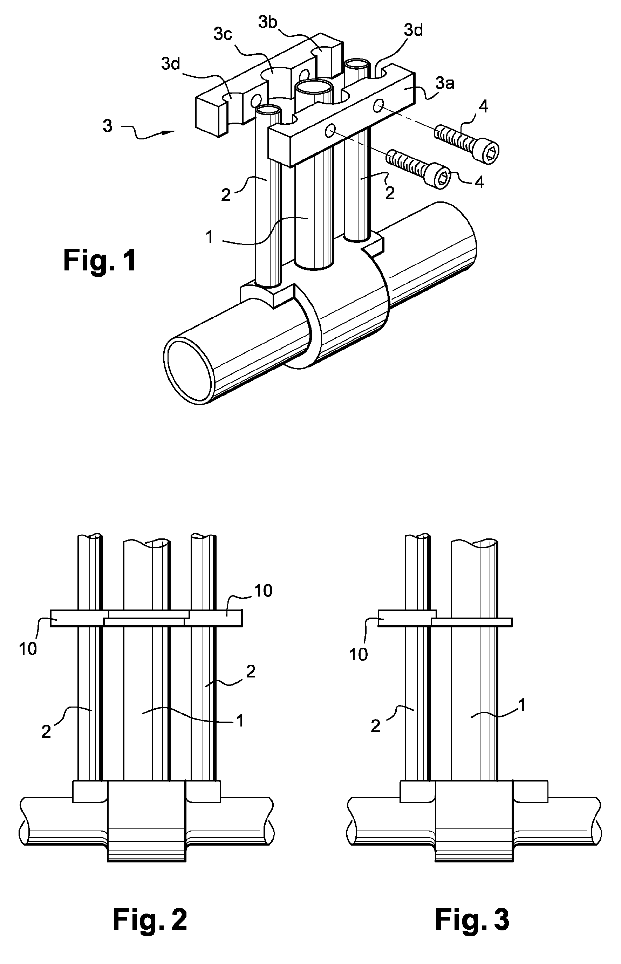

On connaît l'utilisation de valves, vannes, robinets enterrés ou intégrés dans une installation de protection qui sont agencés avec un ou deux conduits d'évents pour des fonctions de purge, pression et autres. Le ou les conduits sont disposés parallèles à la colonne verticale du corps de vanne, comme représenté figure 1 des dessins, cette colonne étant agencée pour permettre la commande et ouverture/fermeture de la vanne. Dans la suite de la description, le terme vanne sera utilisé pour identifier de manière générale tous les moyens équivalents.

Pour assurer un constant espacement entre la colonne centrale (1) et le ou les conduits (2) d'évents, et ce en égard de la hauteur de la colonne, on utilise dans entretoises de liaison (3) qui ont pour fonction d'assurer le parfait maintien en position et espacement du ou des conduits par rapport à la colonne, et ce, en dépit du milieu environnant qui peut être hostile. Les entretoises de liaison (3) sont constituées comme il apparaît figure 1 par deux brides (3a-3b) qui présentent chacune une alvéole centrale (3c) semi-cylindrique pour enserrer la partie en regard de la colonne, et deux alvéoles latérales (3d) semi-cylindriques disposées de part et d'autre de l'alvéole centrale pour enserrer les parties en regard des conduits d'évents (2). La liaison s'effectue par boulonnage transversal (4) entre les brides par le biais de trous taraudés formés dans celles-ci.

Le dispositif de maintien ci-avant décrit présente de nombreux inconvénients. Le montage des brides est peu pratique, car l'opérateur doit d'une main les maintenir accolées et serrées l'une contre l'autre, et ensuite disposer les moyens de liaison du type boulonnage en les positionnant un à un, puis serrer ces derniers à l'aide d'outils du type clé pour le maintien à l'horizontal des entretoises de liaison (3) précitées. La manoeuvre n'est pas pratique, l'horizontalité de positionnement n'est pas toujours assurée. En outre, les entretoises de liaison du type précité sont limitées à l'utilisation pour un écartement déterminé des conduits latéraux par rapport à la colonne, de sorte qu'il est nécessaire d'avoir plusieurs jeux d'entretoises pour s'adapter en fonction de l'équipement de l'installation considérée. Le prix de revient des entretoises reste aussi élevé. Leur stockage est volumineux.

On connaît par ailleurs des pinces de suspension de câbles décrites dans le brevet GB 1.025.166. Ces pinces en forme de U sont montées suspendues à un câble support tandis que le câble à suspendre est maintenu librement à l'horizontal entre les branches de la pince avec une certaine latitude de positionnement en fonction des contraintes de sollicitation du câble de suspension.

On connaît aussi, par le brevet US 5.115.542, un dispositif de maintien de câble en deux parties complémentaires articulées entre elles à une extrémité et verrouillée en position à l'autre extrémité. Ces parties sont elles-mêmes agencées avec des cavités de profil complémentaire définissant des diamètres différents pour la retenue de conduit. La fermeture à charnière et languette de verrouillage offre une fermeture rapide du dispositif.

On connaît aussi, par le brevet US 2007/0034750, un dispositif à gouttière pour la tenue de conduits ou similaires à l'aide de moyens de retenue. Il s'agit seulement dans le document de permettre la suspension de tubes dans des applications de chauffage, ventilation, air conditionné, réfrigération. En d'autres termes, les liens qui peuvent être utilisés n'ont qu'une fonction anti-échappement.

La démarche du Demandeur a donc été, pour son domaine technique spécifique, de rechercher et concevoir un nouveau type de moyens de liaison et d'écartement entre le ou les conduits latéraux parallèles à la colonne de vanne, qui soit de conception simple, rapide et facile à monter, utilisable en cas d'écartement variable entre les conduits latéraux d'évents et la colonne de vanne selon les modèles existants sur le marché.

Un autre but recherché était de concevoir un nouveau type de moyens de liaison qui puisse être parfaitement ajusté et assemblé selon un nombre quelconque d'éléments pour garantir une qualité de tenue et d'écartement entre les conduits et la colonne de vanne considérée.

Un autre but recherché était d'éviter l'utilisation d'outillage à main nécessaire pour la fixation des moyens de liaison précités, pour assurer le blocage ou desserrage du boulon, comme exigé par la solution de l'art antérieur.

La démarche de recherches du Demandeur a permis d'aboutir à la conception d'un dispositif de maintien de conduits d'évents par rapport à la colonne formée sur le corps de vanne qui soit extrêmement pratique à poser par l'opérateur et d'une conception de fabrication très simple.

Selon une première caractéristique de l'invention, le dispositif de maintien des conduits d'évents de corps d'éléments de robinetterie du type vanne caractérisé en ce qu'il comprend au moins un module réalisé monobloc en un matériau plastique et susceptible d'être disposé dans un plan horizontal autour du ou des conduits latéraux et de la colonne du corps de vanne, et en ce que le module présente une configuration en forme de pince avec une base arrière qui est aménagée avec au moins une cavité pour entourer le conduit latéral considéré et se prolongeant à l'avant par deux branches disposées en regard l'une de l'autre, et définissant entre elles une cavité centrale semi-cylindrique pour entourer la colonne principale du corps de robinetterie, et en ce que les deux branches sont susceptibles d'un écartement élastique l'une par rapport à l'autre, le module ayant une configuration globale en forme de pince, et en ce que chaque module présente des ouvertures le long de leur bordure périphérique, d'une part, du côté de la base arrière et en regard de la ou des cavités entourant le conduit et, d'autre part, de part et d'autre de chacune des parties branches entourant la cavité centrale qui sont susceptibles de permettre le positionnement de liens élastiques de fixation, et en ce que les liens disposés de part et d'autre du conduit ont pour fonction d'empêcher le débattement latéral des conduits d'évents et colonne en les enserrant en combinaison avec les cavités de réception desdits conduits.

Ces caractéristiques et d'autres encore ressortiront bien de la suite de la description.

Pour fixer l'objet de l'invention illustrée d'une manière non limitative aux figures des dessins où :
- la figure 1 est une vue en perspective d'un dispositif de maintien de conduits d'évents de corps de robinetterie selon l'art antérieur.
- la figure 2 est une vue de face du dispositif de maintien et de conduit selon l'invention adapté pour le maintien de deux conduits latéraux par rapport à une colonne de corps de vanne.
- la figure 3 est une vue en variante de la figure 2 dans laquelle le dispositif de maintien assure la liaison entre un conduit latéral et la colonne de corps de vanne.

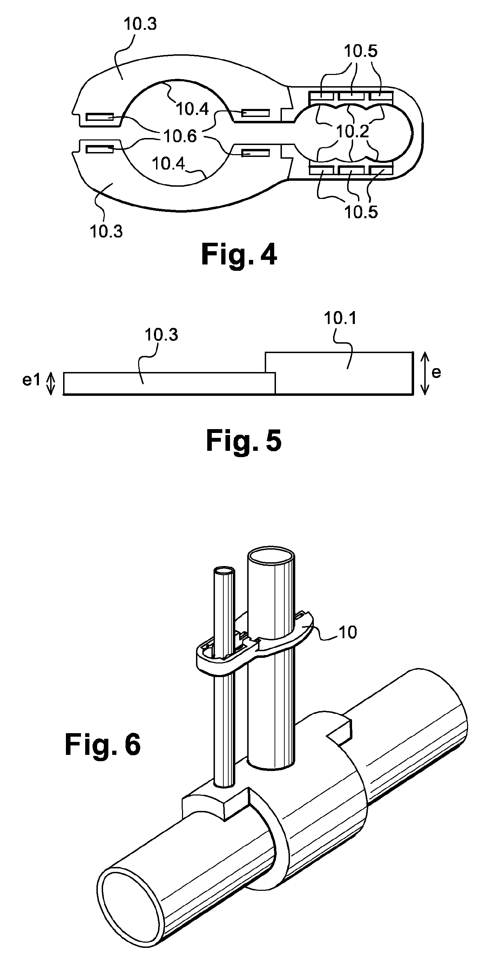

- la figure 4 est une vue de dessus de l'élément modulaire constitutif du dispositif de maintien selon l'invention.
- la figure 5 est une vue de profil selon la figure 4.
- la figure 6 est une vue en perspective du dispositif dans son application au maintien d'un conduit latéral par rapport à la colonne de corps de vanne.
- la figure 7 est une vue en perspective montrant un module avec le lien de fixation.
- la figure 8 est une vue de dessus, selon la figure 7, illustrant la tenue de la colonne centrale (1) et d'un conduit d'évents selon la mise en oeuvre de l'invention.

Afin de rendre plus concret l'objet de l'invention, on le décrit maintenant d'une manière non limitative illustrée aux figures des dessins.

Le dispositif selon l'invention de maintien des conduits d'évents par rapport à la colonne du corps de vanne est ainsi constitué par au moins un module (10) réalisé monobloc en un matériau plastique et susceptible d'être disposé dans un plan horizontal autour du ou des conduits latéraux et de la colonne du corps de vanne. Le module (10) présente une configuration en forme de pince avec une base arrière (10-1) qui est aménagée avec au moins une cavité (10.2) pour entourer le conduit latéral considéré et se prolongeant à l'avant par deux branches (10.3) disposées en regard l'une de l'autre, et définissant entre elles une cavité (10-4) centrale semi-cylindrique pour entourer la colonne principale du corps de robinetterie. Les deux branches sont susceptibles d'un écartement élastique l'une par rapport à l'autre, le module ayant une configuration globale en forme de pince. La base arrière du module présente une ou plusieurs cavités de moindre section disposées successivement et qui sont susceptibles de correspondre à la section des conduits latéraux d'évents. On comprend donc qu'il est possible de positionner les conduits dans l'une des cavités conformées à cet effet, en faisant ainsi modifier l'écartement de prise. A l'avant, la partie centrale est de plus grande section curviligne pour entourer la colonne.

Selon une autre disposition importante de l'invention, la partie avant du module est établie en épaisseur (e1) sur la moitié de l'épaisseur (e) de la base arrière du module considéré, de sorte qu'il est possible par réversibilité de disposer un autre module identique pour venir se positionner à l'appui correspondant sur le premier. Chaque module présente des ouvertures (10.5) le long de leur bordure périphérique (10.6) du côté du talon arrière et de part et d'autre de la partie branche (10.3) qui sont susceptibles de permettre le positionnement des liens (11) élastiques de fixation. Le positionnement relatif de deux modules superposés l'un par rapport à l'autre est établi de manière à ce qu'il y ait un autoblocage des parties entre elles, de sorte à éviter un débattement d'un module par rapport à l'autre. Selon la configuration de l'installation, on peut positionner plusieurs modules assemblés deux à deux et/ou en superposition pour assurer le maintien et la tenue des conduits par rapport à la colonne verticale. La pièce est réalisée par moulage en matière plastique et il suffit de réaliser un seul moule pour concevoir la conformation des modules de par leur réversibilité de position. Le positionnement des modules ainsi réalisés se fait dans un plan horizontal et la liaison s'effectue par des liens élastiques (11) comme représentés aux dessins, de sorte qu'il est possible pour l'opérateur de régler en position les différents éléments, de les espacer et de les lier par des groupes de modules.

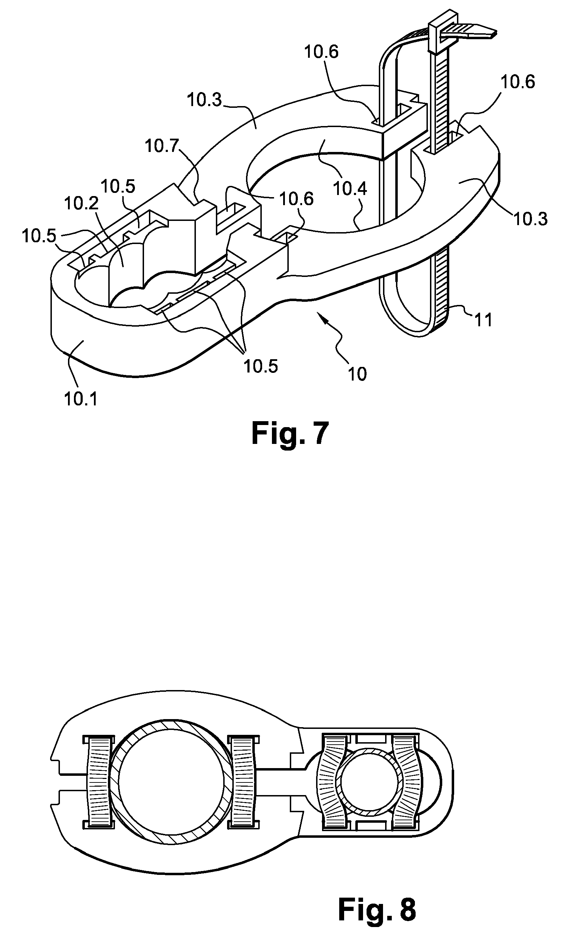

On a ainsi illustré, figure 8, un exemple de maintien de la colonne centrale (1) et d'un conduit (2) d'évents avec l'adjonction de différents liens (11) qui sont positionnés dans les ouvertures (10.5 - 10.6) formées sur chaque module. Ces liens, outre la fonction de liaison et de fermeture du module considéré, ont pour autre fonction d'éviter le débattement latéral de la colonne centrale et du ou des conduits en étant en appui et contact avec ladite colonne (4) et le ou les conduits (2). Ces liens (11) disposés de part et d'autre des conduits et en combinaison avec eux peuvent ainsi, comme représenté figure 8, subir une déformation partielle pour s'adapter aux profils de la colonne et du ou des conduits avec un serrage ferme.

Selon une disposition complémentaire, la cavité (10-4) centrale peut être aménagée de manière apparente avec des picots ou formes en saillie qui sont susceptibles d'être en contact avec la colonne centrale pour renforcer le maintien du module sur la colonne et empêcher l'ensemble de descendre pendant le montage et le blocage des modules. Ces picots ou saillies sont obtenus lors du moulage du module. Les autres cavités (10-2) peuvent, si nécessaire, être agencées avec des picots ou formes en saillie similaires.

L'invention est simple et facile à mettre en oeuvre, de faible coût de fabrication. Les modules sont faciles à positionner et il n'est plus nécessaire d'avoir des outils à main pour assurer leur liaison, comme cela était effectué selon l'art antérieur.

## Revendications

1. Dispositif de maintien des conduits d'évents de corps d'éléments de robinetterie du type vanne **caractérisé en ce qu'**il comprend au moins un module (10) réalisé monobloc en un matériau plastique et susceptible d'être disposé dans un plan horizontal autour du ou des conduits latéraux et de la colonne du corps de vanne, et **en ce que** le module (10) présente une configuration en forme de pince avec une base arrière (10-1) qui est aménagée avec au moins une cavité (10.2) pour entourer le conduit latéral considéré et se prolongeant à l'avant par deux branches (10.3) disposées en regard l'une de l'autre, et définissant entre elles une cavité (10-4) centrale semi-cylindrique pour entourer la colonne principale du corps de robinetterie, et **en ce que** les deux branches sont susceptibles d'un écartement élastique l'une par rapport à l'autre, le module ayant une configuration globale en forme de pince, et **en ce que** chaque module présente des ouvertures (10.5) (10.6) le long de leur bordure périphérique, d'une part, du côté de la base arrière et en regard de la ou des cavités (10.2) et, d'autre part, de part et d'autre de chacune des parties branches (10.3) autour de la cavité (10.4) qui sont susceptibles de permettre le positionnement de liens (11) élastiques de fixation, et **en ce que** les liens (11) disposés de part et d'autre des conduits ont pour fonction d'empêcher le débattement latéral des conduits et colonne en combinaison avec les cavités de réception desdits conduits.

2. Dispositif selon la revendication 1, **caractérisé en ce que** la base arrière du module présente une ou plusieurs cavités de moindre section disposées successivement et qui sont susceptibles de correspondre à la section des conduits latéraux d'évents.

3. Dispositif selon la revendication 1, **caractérisé en ce que** la partie avant du module est établie en épaisseur (e1) sur la moitié de l'épaisseur (e) de la base arrière du module considéré, de sorte qu'il est possible par réversibilité de disposer un autre module identique pour venir se positionner à l'appui correspondant sur le premier.

4. Dispositif selon la revendication 1, **caractérisé en ce que** pour le positionnement relatif de deux modules superposés l'un par rapport à l'autre, ceux-ci sont agencés avec des moyens et formes autorisant leur autoblocage des parties entre elles.

5. Dispositif selon la revendication 1, **caractérisé en ce que** la cavité (10-4) centrale est aménagée de manière apparente avec des picots ou formes en saillie qui sont susceptibles d'être en contact avec la colonne centrale pour renforcer le maintien du module sur la colonne et empêcher l'ensemble de descendre pendant le montage et le blocage des modules.
